(19) Europäisches Patentamt / European Patent Office / Office européen des brevets

(11) **EP 3 031 660 A1**

(12) **DEMANDE DE BREVET EUROPEEN**

(43) Date de publication:
**15.06.2016 Bulletin 2016/24**

(51) Int Cl.:
**B60L 11/18** *(2006.01)* **H02J 7/04** *(2006.01)*

(21) Numéro de dépôt: **15198320.2**

(22) Date de dépôt: **08.12.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **12.12.2014 FR 1462314**

(71) Demandeur: **COMMISSARIAT A L'ENERGIE ATOMIQUE ET AUX ENERGIES ALTERNATIVES 75015 Paris (FR)**

(72) Inventeurs:
• **TRAN, Quoc-Tuan**
  **38610 Gieres (FR)**
• **NGUYEN, Van-Linh**
  **38400 Saint-Martin-d'Hères (FR)**

(74) Mandataire: **Novaimo**
  **Bâtiment Europa 2**
  **310 avenue Marie Curie**
  **Archamps Technopole**
  **74166 Saint-Julien-en-Genevois Cedex (FR)**

(54) **PROCEDE ET DISPOSITIF DE REGLAGE D'UNE PUISSANCE DE CHARGE D'UNE BATTERIE DE VEHICULE AUTOMOBILE ELECTRIQUE**

(57) Le véhicule étant connecté à un réseau électrique en un point de raccordement donné, le procédé comprend :
• une étape de test lors de laquelle on détermine si une tension mesurée au point de raccordement ($V_{mes\_i}$) appartient à une plage de tensions souhaitées ;
• en cas de test négatif, ladite tension mesurée ($V_{mes\_i}$) n'appartenant pas à la plage de tensions souhaitées, on détermine (E5) un coefficient ($k1_i(t)$) de réglage de la puissance de charge du véhicule, à partir d'un état de charge du véhicule ($SOC_i(t)$) et d'une durée de charge restante ($\Delta T_i(t)$) ;
• on règle (E9, E10, E11, E121, E13) la puissance de charge du véhicule électrique ($P_{VEi}$) en fonction du coefficient de réglage déterminé.

**Figure 2A**

**Description**

L'invention concerne un procédé de réglage d'une puissance de charge d'une batterie de véhicule automobile électrique connecté à un réseau électrique en un point de raccordement.

Un réseau électrique permet d'acheminer de l'énergie électrique depuis des centres de production d'électricité vers des consommateurs. Il doit maintenir un équilibre entre la production et la consommation. Il doit aussi assurer, par une gestion dynamique, la stabilité de l'ensemble production - transport - consommation.

Pour l'avenir, on prévoit, d'une part, un fort développement des installations de production décentralisée d'énergie (PDE ou GDE pour génération décentralisée d'énergie) utilisant des sources d'énergie renouvelable, typiquement les systèmes photovoltaïques de production d'électricité, et, d'autre part, un fort développement des véhicules électriques. Ces deux aspects de développement auront des impacts importants sur le fonctionnement et la stabilité des réseaux électriques.

Le raccordement d'installations PDE, telles que des systèmes photovoltaïques, au réseau électrique induit une injection de puissance active et réactive dans le réseau. Cela a pour effet principal de modifier le plan de tension et les transits de puissance au sein du réseau et de provoquer une augmentation du niveau de tension du réseau de distribution, avec potentiellement un dépassement des limites réglementaires admissibles, en particulier durant les périodes de fort ensoleillement et de faible consommation électrique. Cela peut avoir pour conséquence des déconnexions intempestives des installations PDE.

Le raccordement au réseau électrique de véhicules électriques destinés à être rechargés risque également de provoquer une chute de tension dans le réseau. En effet, on peut supposer que ces véhicules électriques seront massivement rechargés sensiblement en même temps, pendant la période de pointe. Selon la structure du réseau électrique, le point de raccordement du véhicule électrique et la puissance de recharge de celui-ci, la tension au point de raccordement est alors susceptible de chuter et de passer au-dessous de la limite admissible généralement fixée à 0,9.pu. En outre, le raccordement massif de véhicules électriques durant la tranche horaire 18h-21 h risque d'augmenter les pics de consommation déjà observés à ce moment là.

La présente invention vient améliorer la situation.

A cet effet, l'invention concerne un procédé de réglage d'une puissance de charge d'une batterie de véhicule automobile électrique connecté à un réseau électrique en un point de raccordement donné comprenant :

- une étape de test lors de laquelle on détermine si une tension mesurée au point de raccordement appartient à une plage de tensions souhaitées ;
- en cas de test négatif, ladite tension mesurée n'appartenant pas à la plage de tensions souhaitées, on détermine un coefficient de réglage de la puissance de charge du véhicule, à partir d'un état de charge du véhicule et d'une durée de charge restante ;
- on règle la puissance de charge du véhicule électrique en fonction du coefficient de réglage déterminé.

Selon l'invention, avant de charger la batterie du véhicule, on réalise une étape de test sur la tension électrique au point de raccordement. Si la tension électrique mesurée au point de raccordement est en dehors d'une plage souhaitée, la puissance de charge est adaptée au moyen du coefficient de réglage déterminé, en tenant compte de l'état de charge de la batterie et de la durée de charge restante. L'invention consiste donc à réguler localement, de façon autonome, la puissance de charge d'un véhicule électrique, en tenant compte de l'état de charge de ce véhicule et de la durée restante de charge prévue, dans le but de maintenir la tension au point de raccordement du véhicule dans une plage de tensions souhaitées. Cette plage de tensions souhaitées est adaptée pour limiter les pertes sur le réseau. Ainsi, globalement, chacun des véhicules raccordés au réseau électrique contribue localement et de façon autonome à régler de façon optimale la tension du réseau, la contribution de chaque véhicule dépendant de son propre état de charge et de sa durée de charge restante.

Avantageusement, le coefficient de réglage déterminé est adapté pour déplacer la tension au point de raccordement vers la plage de tensions souhaitées, notamment pour l'augmenter si la tension mesurée est au-dessous de la plage et pour la diminuer si la tension mesurée est au-dessus de la plage.

Avantageusement encore, on détermine un coefficient de réglage par un premier mode de calcul ou par un deuxième mode de calcul, selon que la tension mesurée au point de raccordement est située au-dessus ou au-dessous de la plage de tensions souhaitées.

Dans un mode de réalisation particulier, le coefficient de réglage est déterminé par logique floue.

Dans ce cas, et avantageusement, il est prévu une étape préalable de configuration lors de laquelle on définit des règles d'inférence pour déterminer un coefficient de réglage à partir d'un état de charge du véhicule et d'une durée de charge, et on détermine, à partir des dites règles d'inférence, des données relatives à deux surfaces numériques correspondant respectivement au premier et au deuxième mode de calcul du coefficient réglage.

Avantageusement encore, les deux surfaces sont relatives à deux plages de valeurs distinctes du coefficient de réglage.

Dans un mode de réalisation particulier, le coefficient de réglage est pondéré par un paramètre représentatif d'un écart de tension entre la tension mesurée au point de raccordement et une tension limite souhaitée. Ainsi, on prend en compte le décalage entre la tension mesurée et la plage de tensions souhaitées. Plus ce décalage est important, plus le coefficient de réglage est élevé.

Dans un autre mode de réalisation particulier, on module la puissance de charge du véhicule en fonction de données relatives à une évolution temporelle d'un tarif de l'électricité. Grâce à cela, le réglage de la puissance de charge est adapté pour charger la batterie de façon économique.

Avantageusement, pour régler la puissance de charge, on multiplie une puissance nominale de charge du véhicule par le coefficient de réglage. La puissance nominale de charge a l'avantage d'avoir une valeur connue et bien définie, généralement fournie par le fabricant de batterie.

Dans un mode de réalisation particulier, la plage de tensions souhaitées a une borne supérieure qui est strictement inférieure à 1,1pu et une borne inférieure qui est strictement supérieure à 0,9pu, notamment une borne supérieure inférieure ou égale à 1.05pu et une borne inférieure supérieure ou égale à 0.95pu.

L'invention concerne aussi un dispositif de réglage d'une puissance de charge d'une batterie de véhicule automobile électrique connecté à un réseau électrique en un point de raccordement donné comprenant :

- un module de test adapté pour déterminer si une tension mesurée au point de raccordement appartient à une plage de tensions souhaitées ;
- un module de détermination d'un coefficient de réglage de la puissance de charge du véhicule, adapté pour déterminer ledit coefficient de réglage à partir d'un état de charge du véhicule et d'une durée de charge restante, en cas de test négatif, ladite tension mesurée n'appartenant pas à la plage de tensions souhaitées ;
- un module de commande adapté pour régler la puissance de charge du véhicule électrique en fonction du coefficient de réglage déterminé.

Le dispositif de réglage comprend avantageusement tout ou partie des caractéristiques additionnelles suivantes :

- il comprend un module de configuration adapté pour définir des règles d'inférence pour déterminer un coefficient de réglage à partir d'un état de charge du véhicule et d'une durée de charge, et pour déterminer, à partir des dites règles d'inférence, des données relatives à deux surfaces numériques correspondant respectivement au premier et au deuxième mode de calcul du coefficient réglage ;
- il comprend un module de pondération adapté pour pondérer le coefficient de réglage par un paramètre représentatif d'un écart de tension entre la tension mesurée au point de raccordement et une tension limite souhaitée ;
- il comprend un module de modulation destiné à moduler la puissance de charge du véhicule en fonction de données relatives à une évolution temporelle d'un tarif de l'électricité.

L'invention concerne encore un véhicule automobile électrique comportant une batterie électrique et un dispositif de réglage d'une puissance de charge tel que défini ci-dessus.

L'invention sera mieux comprise à l'aide de la description suivante d'un mode de réalisation particulier du procédé de réglage d'un puissance de charge électrique d'une batterie électrique de véhicule automobile et d'une forme de réalisation particulière d'un dispositif de réglage correspondant selon l'invention, en référence aux dessins annexés sur lesquels :

- La figure 1 représente de façon schématique le principe de détermination par logique floue d'un coefficient de réglage de la puissance de charge d'un véhicule ;
- Les figures 2A et 2B représentent de façon schématique le principe de détermination de la puissance de charge d'un véhicule selon deux modes de calcul distincts ;
- Les figures 3 à 6 représentent des fonctions d'appartenance en logique floue qui sont respectivement relatives à un état de charge de la batterie, à la durée de charge de la batterie, au coefficient de réglage selon un premier mode de calcul et au coefficient de réglage selon un deuxième mode de calcul ;
- La figure 7 représente une table d'inférence contenant des règles d'inférence ;
- Les figures 8A et 8B représentent respectivement deux surfaces numériques, obtenues à partir de la table d'inférence de la figure 7 par une fonction de logique floue, et respectivement relatives à l'évolution du coefficient de réglage selon les deux modes de calcul en fonction d'un état de charge et d'une durée de charge de la batterie ;
- La figure 9 représente un organigramme des étapes du procédé de réglage, selon un mode de réalisation particulier de l'invention ;
- La figure 10 représente un schéma bloc fonctionnel du dispositif de réglage, selon une forme de réalisation particulière de l'invention ;

- La figure 11 représente une courbe de variation ou d'évolution temporelle d'un tarif dynamique d'électricité ;
- La figure 12 représente une courbe de variation ou d'évolution temporelle d'un facteur de modulation β.

Le procédé de l'invention vise à régler la puissance de charge électrique d'une batterie électrique 3 d'un véhicule électrique $VE_i$, ici un véhicule automobile, raccordé à un réseau électrique 1 en un point de raccordement donné $p_i$.

Le véhicule électrique $VE_i$ comprend, outre la batterie électrique 3, un système BMS (de l'anglais « Battery Management System ») 4 de gestion de la batterie 3 et un dispositif 2 de réglage de la puissance de charge de la batterie 3.

Le système BMS 4 surveille l'état de différents éléments de la batterie 3, notamment l'état de charge ou $SOC_i$ (de l'anglais « State Of Charge ») de la batterie à chaque instant t.

Le dispositif de réglage de la puissance de charge 2 a pour rôle de contrôler et de régler la puissance de charge de la batterie 3. En outre, il surveille la tension électrique au point de raccordement $p_i$ du véhicule électrique au réseau électrique, lors d'une charge.

La batterie 3 dispose d'une puissance nominale de charge, indiquée par le fabricant, notée $P_{n\_VEi}$. Dans l'exemple de réalisation particulier décrit ici, la puissance nominale de charge du véhicule $VE_i$ est égale à 3kW. Cette puissance nominale correspond à la puissance maximale de charge du véhicule $VE_i$. Autrement dit, le véhicule $VE_i$ peut charger avec une puissance de charge inférieure ou égale à $P_{n\_VEi}$ (ici 3kW). Le dispositif de réglage de la puissance de charge 2 est adapté pour régler la puissance de charge. En fonctionnement normal, cette puissance de charge est réglée à une valeur standard $P_{s\_VEi}$ strictement inférieure à la puissance nominale $P_{n\_VEi}$. Par exemple, la puissance de charge standard $P_{s\_VEi}$ est égale à 2,2kW.

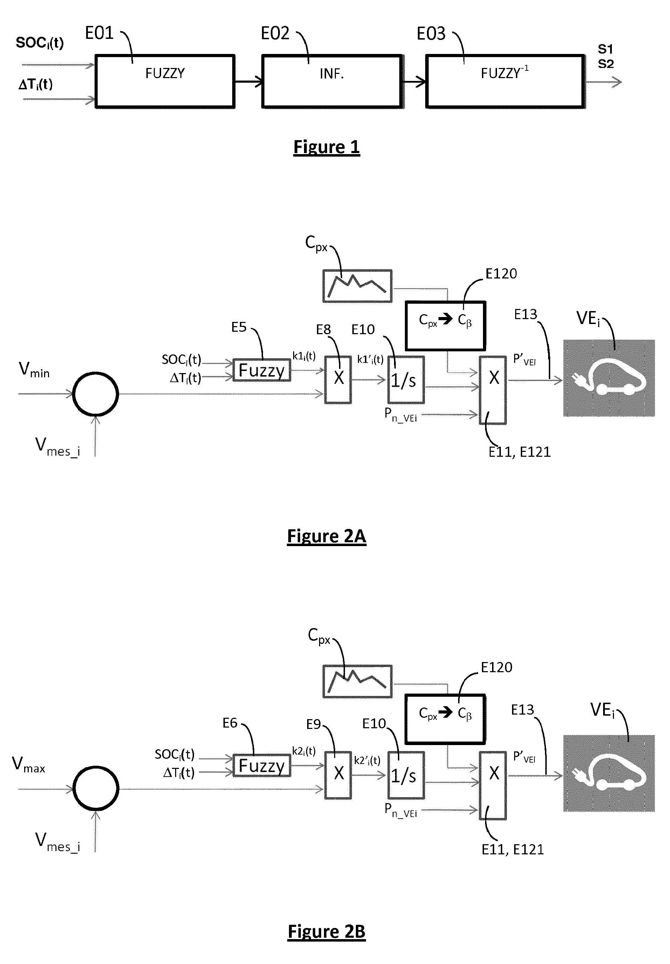

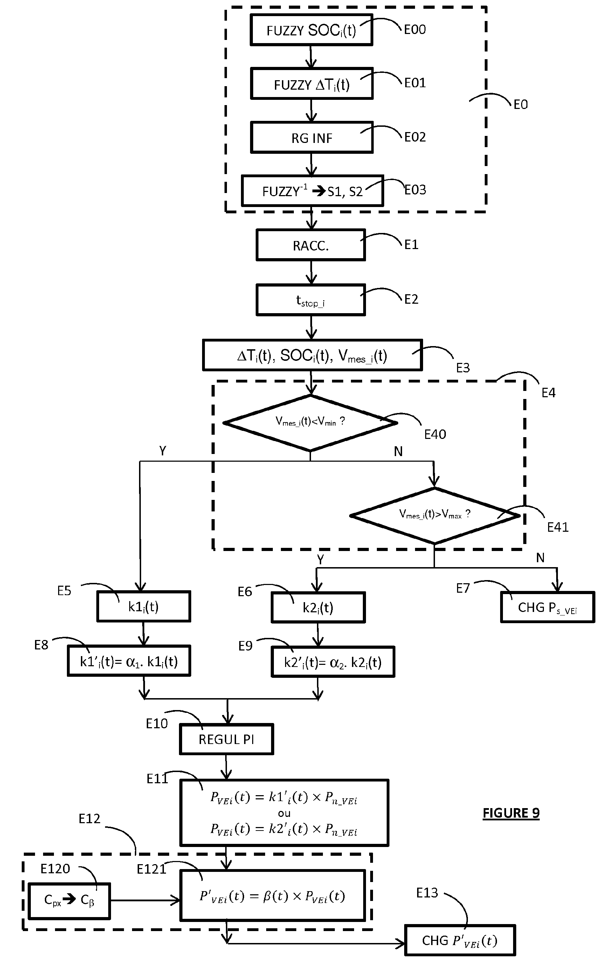

Le procédé de charge comprend une première étape E1 de raccordement du véhicule électrique $VE_i$ au réseau électrique 1 par un utilisateur, en référence aux figures 9, 2A, 2B et 1.

Sur détection du raccordement, l'utilisateur est invité à indiquer un instant d'arrêt de charge, noté $t_{stop\_i}$, par une interface utilisateur 20 du dispositif de réglage de la puissance 2, lors d'une étape E2.

Lors d'une étape E3, le dispositif de réglage de la puissance 2 détermine les valeurs, à l'instant courant t, des paramètres suivants :

- durée de charge prévue restante $\Delta T_i(t)$, donnée par la relation suivante

$$\Delta T_i(t) = t_{stop\_i} - t \; ;$$

- état de charge de la batterie 3, noté $SOC_i(t)$,
- tension au point de raccordement, notée $V_{mes\_i}(t)$.

La durée de charge restante est dite « prévue » dans le sens où il s'agit d'une durée fixée initialement par l'utilisateur mais qui, en pratique, est susceptible d'être écourtée, par exemple si l'utilisateur souhaite utiliser son véhicule avant l'instant $t_{stop\_i}$.

L'état de charge à l'instant t, $SOC_i(t)$, est fourni par le système BMS 4.

La tension électrique au point de raccordement $V_{mes\_i}(t)$ est mesurée par le dispositif de réglage de la puissance de charge 2, au moyen d'un voltmètre 22.

Le procédé passe ensuite à une étape de test E4. Cette étape E4 comprend deux tests E40, E41. Elle vise à déterminer si la tension mesurée au point de raccordement $V_{mes\_i}(t)$ appartient à une plage de tensions souhaitées définie par une borne supérieure $V_{max}$ et par une borne inférieure $V_{min}$. Les tests E40, E41 sont exécutés par un module de test 23 du dispositif de réglage de la puissance de charge 2. L'étape de test E4 sur la tension au point de raccordement est réalisée avant de charger la batterie du véhicule. Son but est de vérifier l'état du réseau électrique au point de raccordement avant de commencer la charge de la batterie afin d'adapter la puissance de charge en conséquence.

Un réseau électrique de distribution dispose d'une plage de tensions admissibles, comprise entre *pu - x%.pu* et *pu + x%.pu*, où le paramètre « *pu*» représente une tension nominale (la tension nominale étant égale à 1.0 *pu*). Cette plage de tensions admissibles est réglementaire. En France, par exemple, la tension délivrée par le réseau électrique BT (Basse Tension) doit être comprise dans une plage admissible de tensions comprise entre 0,9.pu et 1,1.pu, pu étant égale à 230V.

Dans l'invention, la plage de tensions souhaitées [$V_{min}$, $V_{max}$] est contenue strictement à l'intérieur de la plage de tensions admissibles. La borne supérieure $V_{max}$ est strictement inférieure à la tension admissible maximale *pu + x%.pu*, et la borne inférieure $V_{min}$ est strictement supérieure à la tension admissible minimale *pu - x%.pu*. Dans l'exemple de réalisation particulier décrit ici, la borne inférieure $V_{min}$ est égale à 0,95.pu et la borne supérieure $V_{max}$ est égale à 1,05.pu.

Si la tension mesurée au point de raccordement $V_{mes\_i}(t)$ est inférieure à la tension minimale souhaitée $V_{min}$, autrement dit $V_{mes\_i}(t)<0,95.pu$, le procédé passe à une étape E5 de détermination d'un coefficient $k1_i(t)$ de réglage de la puissance de charge du véhicule de réglage selon un premier mode de calcul.

Si la tension mesurée au point de raccordement $V_{mes\_i}(t)$ est supérieure à la tension maximale souhaitée $V_{max}$, autrement dit $V_{mes\_i}(t)>1,05.pu$, le procédé passe à une étape E6 de détermination d'un coefficient $k2_i(t)$ de réglage de la puissance de charge du véhicule de réglage selon un deuxième mode de calcul.

Si la tension mesurée au point de raccordement $V_{mes\_i}(t)$ appartient à la plage de tensions souhaitées (ici [0,95. *pu,* 1,05. *pu*]), autrement dit si elle est inférieure ou égale à $V_{max}$ et supérieure ou égale à $V_{min}$, alors la batterie 3 est rechargée normalement, à la puissance de charge standard $P_{s\_VEi}$, sous le contrôle du module, lors d'une étape E7. Dans l'exemple de réalisation décrit ici, la batterie 3 est chargée avec une puissance de charge standard égale à 2,2 kW.

Dans le mode de réalisation particulier décrit ici, le coefficient de réglage de la puissance de charge, $k1_i$ ou $k2_i$, est destiné à multiplier ultérieurement la puissance nominale de charge $P_{n\_VEi}$ afin de déterminer une puissance de charge de la batterie 3. Il est déterminé, pour chaque instant t, à partir de l'état de charge $SOC_i(t)$ du véhicule électrique à l'instant t et de la durée de charge restante $\Delta T_i(t)$ à l'instant t. Ainsi, le coefficient de réglage $k1_i(t)$ ou $k2_i(t)$ dépend de l'état de charge $SOC_i(t)$ et de la durée de charge restante $\Delta T_i(t)$ du véhicule $VE_i$ à l'instant t. La détermination du coefficient de réglage est adaptée pour déplacer la tension au point de raccordement $V_{mes\_i}(t)$ vers la plage de tensions souhaitées (ici [0,95.*pu*, 1,05.*pu*]), notamment pour l'augmenter si la tension mesurée $V_{mes\_i}(t)$ est au-dessous de la plage souhaitée (autrement dit ici inférieure à 0,95.pu) et pour la diminuer si la tension mesurée $V_{mes\_i}(t)$ est au-dessus de la plage souhaitée (autrement dit ici supérieure à 1,05. pu).

Dans le mode de réalisation particulier décrit ici, le coefficient de réglage $k1_i(t)$ ou $k2_i(t)$ est calculé par logique floue, ou « fuzzy logic » en anglais.

On va maintenant décrire l'exécution de l'étape E5 de détermination du coefficient de réglage $k1_i$ selon le premier mode de calcul. L'étape E6 de détermination du coefficient de réglage $k2_i$ selon le deuxième mode de calcul est analogue à l'étape E5, à la différence près que $k1_i$ et $k2_i$ appartiennent respectivement à deux plages de valeurs distinctes, comme cela apparaître dans la description qui suit. Ces étapes E5 et E6 sont exécutées par un module de calcule 25.

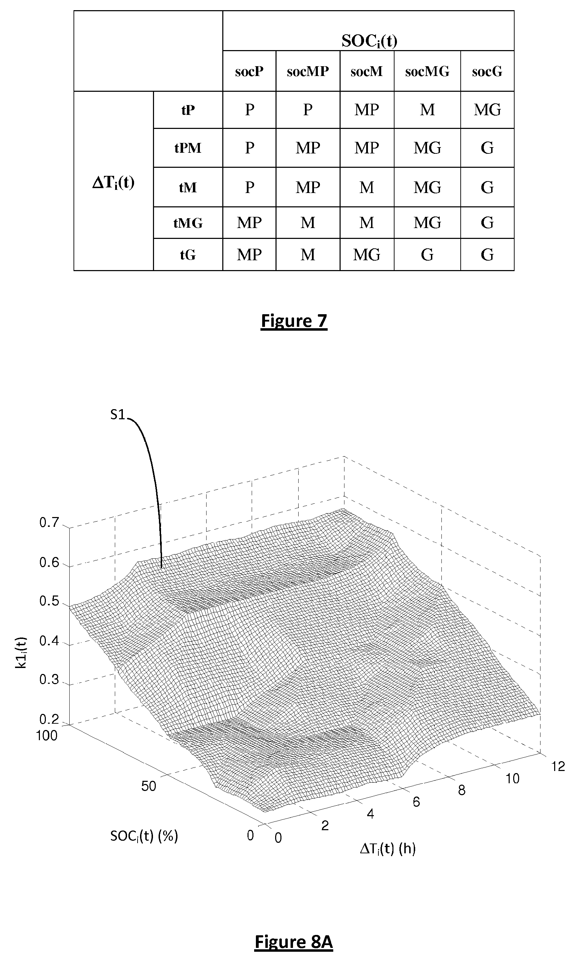

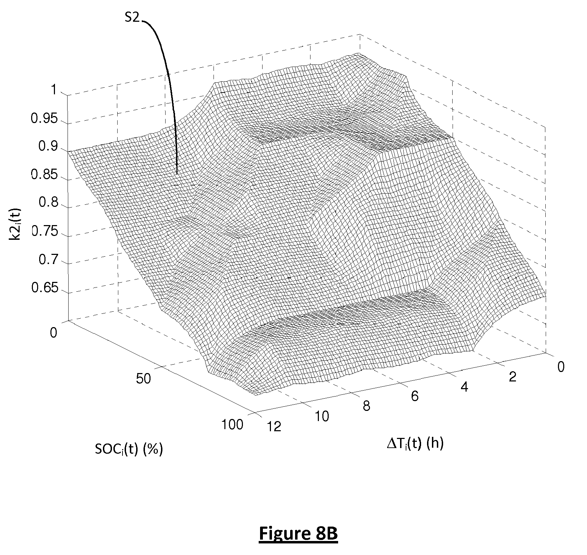

L'étape E5 (respectivement E6) utilise des données d'évolution du coefficient de réglage $k1_i$ (respectivement $k2_i$) en fonction de l'état de charge $SOC_i(t)$ et de la durée de charge restante $\Delta T_i(t)$. Ces données d'évolution du coefficient de réglage $k1_i$ (respectivement $k2_i$) sont stockées dans une mémoire 27 du dispositif de réglage de la puissance de charge 2. Elles peuvent être représentées par une surface tridimensionnelle S1 (respectivement S2) telle que représentée sur la figure 8A (respectivement 8B). Sur cette figure 8A (respectivement 8B), on voit que, à chaque couple de valeurs de $SOC_i(t)$ et de durée de charge $\Delta T_i(t)$, correspond un coefficient de réglage $k1_i(t)$ (respectivement $k2_i(t)$). Cette surface S1 (respectivement S2), c'est-à-dire les données d'évolution correspondantes, est déterminée lors d'une étape E0 de configuration du dispositif de réglage de la puissance de charge 2.

L'étape E0 de détermination des données d'évolution du coefficient de réglage $k1_i(t)$ (respectivement $k2_i(t)$) en fonction de l'état de charge $SOC_i(t)$ et de la durée de charge restante $\Delta T_i(t)$ de la batterie 3 (autrement dit de la surface S1 ou S2) est réalisée par une méthode de logique floue. Elle est mise en oeuvre par un module de configuration 26 du dispositif de réglage de la puissance de charge 2.

En logique floue, les paramètres ou variables (en l'espèce le $SOC_i$, la durée de charge $\Delta T_i$ et le coefficient de réglage $k1_i$ ou $k2_i$) sont chacun caractérisés par différents sous-ensembles respectivement définis par différentes variables linguistiques.

Les sous-ensembles relatifs à l'état de charge (ou $SOC_i(t)$) sont définis ici par les variables suivantes :

- « socP » pour « SOC petit »,
- « socMP » pour « SOC moyennement petit »,
- « socM » pour « SOC moyen »,
- « socMG » pour « SOC moyennement grand » et
- « socG » pour « SOC grand ».

Les sous-ensembles relatifs à la durée de charge (ou $\Delta T_i(t)$) sont définis ici par les variables suivantes :

- « $\Delta TP$ » pour « durée de charge petite »,
- « $\Delta TMP$ » pour « durée de charge moyennement petite »,
- « $\Delta TM$ » pour « durée de charge moyenne »,
- « $\Delta TMG$ » pour « durée de charge moyennement grande » et
- « $\Delta TG$ » pour « durée de charge grande ».

Les sous-ensembles relatifs au coefficient de réglage $k1_i(t)$ (ou $k2_i(t)$) sont définis ici par les variables suivantes :

- « P » pour « coefficient petit »,
- « MP » pour « coefficient moyennement petit »,
- « M » pour « coefficient moyen »,
- « MG » pour « coefficient moyennement grand » et
- « G » pour « coefficient grand ».

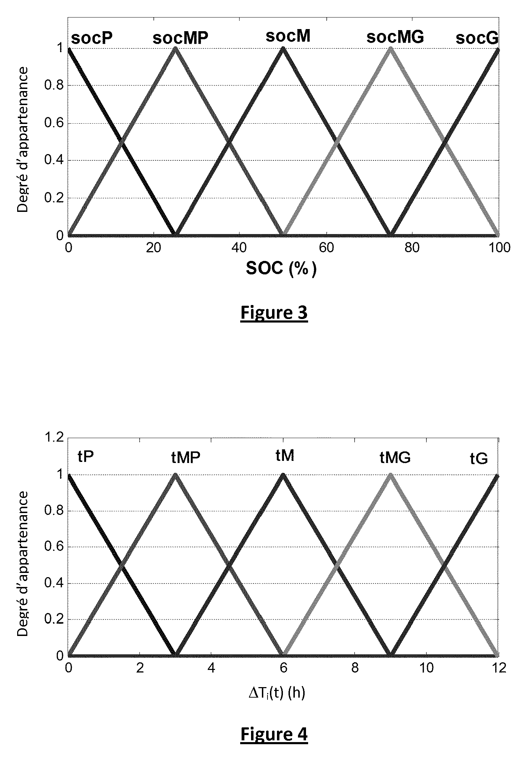

Une première sous-étape de fuzzification E00 consiste à traduire l'état de charge $SOC_i(t)$, compris entre 0% et 100%, en degré(s) d'appartenance aux sous-ensembles mentionnés plus haut par des fonctions d'appartenance telles que représentées sur la figure 3. L'état de charge ainsi traduit en variables linguistiques constitue une première composante de réglage.

Une deuxième sous-étape de fuzzification E01 consiste à traduire la durée de charge restante $\Delta T(t)_i$, comprise par exemple entre 0 et 12h, est traduite en degrés d'appartenance aux sous-ensembles précédemment mentionnés par des fonctions d'appartenance telles que représentées sur la figure 4. Cette durée de charge restante ainsi traduite en variables linguistiques constitue une deuxième composante de réglage.

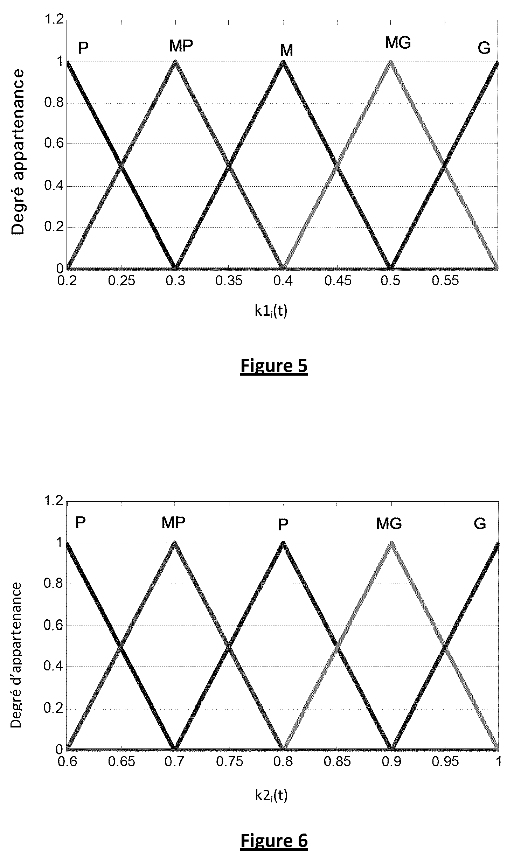

Une troisième sous-étape E02 de définition de règles d'inférence consiste à définir des règles d'inférence telles que représentées dans le tableau double entrées de la figure 7, appelé « table d'inférence ». Ces règles définissent des relations entre des couples d'état de charge $SOC(t)_i$ (en colonne) et de durée de charge $\Delta T(t)_i$ (en ligne), et un coefficient de réglage $k1_i(t)$ ou $k2_i(t)$ résultant (à l'intersection d'une colonne et d'une ligne). Le coefficient de réglage résultant est également défini par des degrés d'appartenance à un ou plusieurs sous-ensembles de fonctions d'appartenance telles que représentées sur la figure 5 pour le coefficient $k1_i$ (respectivement sur la figure 6 pour le coefficient $k2_i$). Les coefficients $k1_i$ et $k2_i$ appartiennent à deux plages de valeurs numériques distinctes, en l'espèce la première plage [0,2 ; 0,6] et la deuxième plage [0,6 ; 1]. Des plages différentes pourraient toutefois êtres choisies.

Une quatrième sous-étape E03 consiste à déterminer des données d'évolution du coefficient de réglage $k1_i(t)$ (respectivement $k2_i(t)$), autrement dit de la surface numérique S1 (respectivement S2), à partir des règles d'inférence définies et représentées dans le tableau de la figure 7. Cette sous-étape correspond, en logique floue, à une étape de « défuzzification » réalisée pour tous les couples d'état de charge $SOC(t)_i$ et de durée de charge $\Delta T(t)_i$. Elle est exécutée par une fonction de type « fuzzy » de logique floue, connue de l'homme du métier, disponible par exemple dans un outil logiciel tel que MATLAB® ou Simulink®. Elle permet de déterminer les valeurs numériques du coefficient de réglage $k1_i(t)$ (respectivement $k2_i(t)$), à partir des couples d'états de charge et de durée de charge, et en appliquant les règles d'inférence définies.

On soulignera que le tableau contenant les règles d'inférence (figure 7) permet de déterminer les deux surfaces S1 et S2, par paramétrage de la fonction de logique floue exécutée. La première surface S1 est déterminée pour la première plage de valeurs numériques du coefficient de réglage, en l'espèce [0,2 ; 0,6], alors que la deuxième surface S2 est déterminée pour la deuxième plage de valeurs numériques du coefficient de réglage, en l'espèce [0,6 ; 1].

Lors de l'étape E5 ou E6, le dispositif de réglage de la puissance de charge 2 détermine pour l'instant courant t une valeur de coefficient de réglage $k1_i(t)$ ou $k2_i(t)$, à partir des valeurs courantes de l'état de charge $SOC(t)_i$ et de la durée de charge restante $\Delta T_i(t)$, en utilisant soit la surface S1 (ou les données d'évolution correspondantes), soit la surface S2 (ou les données d'évolution correspondantes), selon que la tension $V_{mes\_i}(t)$ mesurée au point de raccordement est inférieure à la tension $V_{min}$ minimale souhaitée ou bien supérieure à la tension $V_{max}$ maximale souhaitée. Le coefficient de réglage $k1_i(t)$ ou $k2_i(t)$ est adapté pour déplacer la tension au point de raccordement vers la plage de tensions souhaitées, notamment pour l'augmenter si la tension mesurée est au-dessous de la plage et pour la diminuer si la tension mesurée est au-dessus de la plage.

L'étape E5 (ou E6) est suivie d'une étape E8 (ou E9). Lors de l'étape E8 (ou E9), le coefficient de réglage $k1_i(t)$ (ou $k2_i(t)$) déterminé à l'étape E5 (ou E6) est pondéré par un paramètre $\alpha_1$ (ou $\alpha_2$) représentatif d'un écart de tension entre la tension mesurée au point de raccordement $V_{mes\_i}(t)$ et la tension limite souhaitée la plus proche. La tension limite souhaitée la plus proche est soit la tension minimale souhaitée $V_{min}$ si $V_{mes\_i}(t) < V_{min}$, soit la tension maximale souhaitée $V_{max}$ si $V_{mes\_i}(t) > V_{max}$. On note $\alpha_1$ le paramètre d'écart de tension dans le premier cas ($V_{mes\_i}(t) < V_{min}$) et $\alpha_2$ le paramètre d'écart de tension dans le deuxième cas ($V_{mes\_i}(t) > V_{max}$). Le paramètre $\alpha_1$ ou $\alpha_2$ est ici égal à l'écart de tension normalisée. Il peut être déterminé par la relation suivante :

$$- \quad \text{si } V_{mes\_i}(t) < V_{min} : \alpha_1 = \frac{V_{min} - V_{mes\_i}(t)}{pu}$$

$$- \quad \text{si } V_{mes\_i}(t) > V_{max} : \alpha_2 = \frac{V_{mes\_i}(t) - V_{max}}{pu}$$

Les paramètres $\alpha_1$ et $\alpha_2$ sont déterminés par un module de calcul 28 du dispositif de réglage de la puissance de charge 2.

Pour pondérer le coefficient de réglage k1$_i$(t) (ou k2$_i$(t)) par l'écart de tension, on multiplie k1$_i$(t) (ou k2$_i$(t)) par le paramètre $\alpha_1$ (ou $\alpha_2$). On note k1'$_i$(t) (ou k2'$_i$(t)) le coefficient pondéré résultant. Il est tel que :

$$- \quad k1'_i(t) = \alpha_1 . \, k1_i(t) \quad \text{ou}$$

$$- \quad k2'_i(t) = \alpha_2 . \, k2_i(t)$$

L'opération de pondération E8 ou E9 est mise en oeuvre par un module de pondération 29 du dispositif de réglage de la puissance de charge 2.

Le procédé comprend ensuite une étape E10 de régulation lors de laquelle la valeur du coefficient de réglage pondéré k1'$_i$(t) ou k2'$_i$(t) est régulée par un régulateur 30 du dispositif de réglage de la puissance 2, ici un régulateur PI (« proportionnel intégral »).

Le procédé passe ensuite à une étape E11 de calcul d'une puissance de charge $P_{VEi}$(T) pour l'instant t. L'étape de calcul E11 consiste à multiplier la puissance nominale de charge $P_{n\_VEi}$ par le coefficient de réglage pondéré déterminée k1'$_i$(t) ou k2'$_i$(t), selon que le cas de figure (c'est-à-dire selon que la tension $V_{mes\_i}$(t) mesurée au point de raccordement est inférieure à la tension $V_{min}$ minimale souhaitée ou bien supérieure à la tension $V_{max}$ maximale souhaitée). La puissance de charge est donc déterminée par l'une des relations suivantes :

$$- \quad \text{si } V_{mes\_i}(t) < V_{min} : P_{VEi}(t) = k1'_i(t) \times P_{n\_VEi}$$

$$- \quad \text{si } V_{mes\_i}(t) > V_{max} : P_{VEi}(t) = k2'_i(t) \times P_{n\_VEi}$$

Dans un mode de réalisation particulier, la puissance de charge $P_{VEi}$ est modulée par des données relatives au tarif de l'électricité, lors d'une étape de modulation E12.

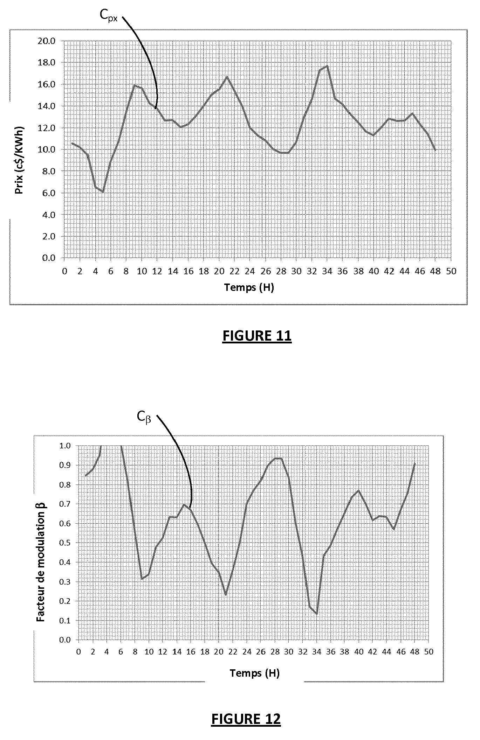

Sur la figure 11, on a représenté à titre d'exemple illustratif une courbe $C_{px}$ de variation du prix de l'électricité sur 2 jours (48h) dans le cas d'un tarif d'électricité dynamique. Une telle courbe peut être mise à jour de façon régulière, par exemple quotidiennement, par l'opérateur du réseau électrique. On pourrait envisager toute autre courbe de variation du tarif, notamment une courbe avec deux tarifs de jour et de nuit respectivement.

L'étape de modulation E12 comprend une étape préliminaire de configuration E120, consistant à traiter les données de variation du tarif en fonction du temps, stockées dans une mémoire 33, et à les transformer en données de variation d'un facteur $\beta$ de modulation de la puissance de charge en fonction du temps. Ainsi, on transforme la courbe $C_{px}$ de variation du tarif en fonction du temps (figure 11) en une courbe $C_\beta$ de variation d'un facteur $\beta$(t) de modulation de la puissance de charge en fonction du temps (figure 12). La transformation (ou le traitement) est exécutée par un module de traitement 34 du dispositif de réglage de la puissance 2. Les données de variation du facteur $\beta$ de modulation de la puissance de charge en fonction du temps, correspondant à la courbe sont ensuite enregistrées dans une mémoire 35. Dans l'exemple de réalisation particulier décrit ici, le traitement consiste à inverser et à normaliser la courbe de variation du tarif $C_{px}$. Après inversion, les pics d'amplitude de la courbe de tarif sont transformés en creux d'amplitude. A l'inverse, les creux d'amplitude de la courbe de tarif sont transformés en pics d'amplitude. L'étape préliminaire E120 est exécutée par le dispositif de réglage de la puissance de charge 2. Elle peut être mise en oeuvre de façon anticipée, par exemple dès la réception et l'enregistrement des données de variation du tarif en mémoire.

L'étape de modulation E12 comprend également une étape E121 de calcul de la puissance de charge modulée $P'_{VEi}$(t). Le calcul consiste ici à multiplier la puissance de charge $P_{VEi}$(t) par le facteur de modulation $\beta$(t) afin d'obtenir la puissance de charge modulée $P'_{VEi}$(t) selon la relation suivante :

$$P'_{VEi}(t) = \beta(t) \times P_{VEi}(t)$$

Les étapes E11 et E12 peuvent être mises en oeuvre par un même module de calcul 31 du dispositif de réglage de la puissance 2, simultanément ou l'une après l'autre. En variante, elles sont mises en oeuvre par deux modules de calcul distincts, l'une après l'autre.

L'étape de modulation E12 est toutefois optionnelle. Elle n'est pas non plus mise en oeuvre dans le cas d'un tarif non dynamique.

Un module de réglage et de commande 32 du dispositif de réglage de la puissance de charge 2 règle et commande la puissance de charge du véhicule $VE_i$ à la valeur déterminée de $P'_{VEi}(t)$. Le véhicule $VE_i$ est alors chargé avec la puissance de charge $P'_{VEi}(t)$, lors d'une étape E13.

Le procédé de réglage de la puissance de charge est mis en oeuvre par un groupe ou « pool » de véhicules automobiles. Chacun des véhicules du pool effectue localement et de façon autonome un réglage de sa propre puissance de charge en tenant compte de différents éléments : l'état de charge de sa batterie, la durée de charge restante, le décalage entre la tension au point de raccordement et la plage de tensions souhaitées et le tarif courant de l'électricité (dans le cas où celui-ci est dynamique). Le réglage de la puissance de charge selon l'invention est adapté pour amener la tension au point de raccordement vers la plage de tensions souhaitées :

- lorsque la tension au point de raccordement est trop basse (inférieure à $V_{min}$), la puissance de charge est diminuée de manière à faire augmenter la tension au point de raccordement ;
- lorsque la tension au point de raccordement est trop élevée (supérieure à $V_{max}$), la puissance de charge est augmentée de manière à faire baisser la tension au point de raccordement.

Ainsi, chaque véhicule participe de façon autonome et locale à un réglage optimal de la tension du réseau électrique en fonction de ses possibilités d'action, notamment en fonction de son état de charge et de sa durée de charge. Grâce à cela, les fluctuations de tension du réseau sont fortement réduites. En outre, les pics de consommation d'électricité, notamment en soirée, sont fortement atténués.

En outre, le réglage peut être adapté pour que la charge soit la plus économique possible, en tenant compte de la variation du tarif de l'électricité.

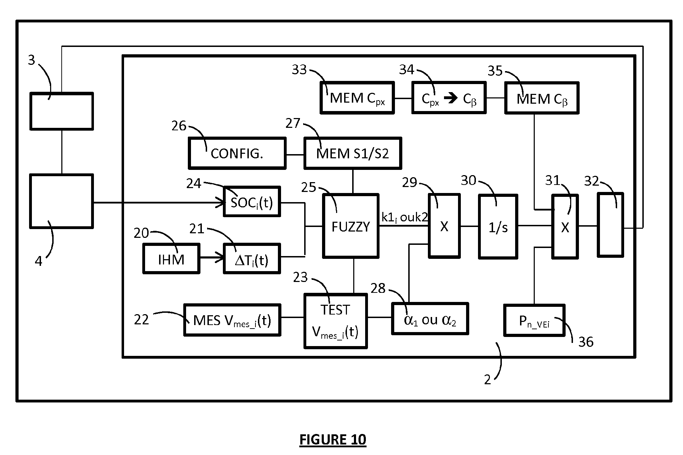

Sur la figure 10, on a représenté un schéma bloc fonctionnel du véhicule électrique $VE_i$. Seuls les éléments nécessaires à la compréhension de l'invention seront décrits. Comme précédemment indiqué, le véhicule $VE_i$ comprend la batterie 3, le système BMS 4 et le dispositif de réglage de la puissance de charge 2.

Le dispositif de réglage de la puissance de charge 2 comprend les éléments suivants :

- une interface utilisateur 20, dotée notamment d'un clavier, d'un écran et d'une application logicielle d'interface utilisateur ;
- un module 21 de calcul de la durée de charge restante $\Delta T_i(t)$ à partir de l'instant de fin de charge $t_{stop\_i}$;
- un module 22 de mesure de la tension au point de raccordement $V_{mes\_i}(t)$ comportant un potentiomètre ;
- un module de test 23, destiné à exécuter les tests E40 et E41 afin de déterminer si la tension $V_{mes\_i}(t)$ est au-dessus, au-dessous ou dans la plage de tension souhaitées comprise entre $V_{min}$ et $V_{max}$ ;
- un module 24 de réception de l'état de charge $SOC_i(t)$ fourni par le système BMS 4 ;
- un module 25 de calcul par logique floue d'un coefficient $k1_i$ ou $k2_i$ de réglage de puissance, apte à mettre en oeuvre les étapes E5 et E6 ;
- un module de configuration 26, apte à mettre en oeuvre l'étape E0 afin de déterminer les données représentatives des surfaces S1 et S2 ;
- une mémoire 27 de stockage des données relatives aux surfaces S1 et S2;
- un module 28 de détermination d'un paramètre de pondération $\alpha_1$ ou $\alpha_2$ ;
- un module de pondération 29, apte à mettre en oeuvre les étapes E8 et E9, destiné à multiplier le coefficient de réglage $k1_i(t)$ (ou $k2_i(t)$) par le paramètre de pondération $\alpha_1$ (ou $\alpha_2$) afin de calculer le coefficient pondéré $k1'_i(t)$ (ou $k2'_i(t)$) ;
- un régulateur, ici un régulateur PI, 30, destiné à mettre en oeuvre l'étape afin de réguler le coefficient de réglage pondéré $k1'_i(t)$ (ou $k2'_i(t)$) ;
- une mémoire 33 de stockage de données d'évolution temporelle du tarif de l'électricité ;
- un module de traitement 34, destiné à mettre en oeuvre l'étape de traitement E120 et à déterminer les données d'évolution du facteur de modulation $\beta(t)$ à partir des données d'évolution du tarif ;
- une mémoire 35 de stockage de données d'évolution temporelle du facteur de modulation $\beta(t)$ ;
- une mémoire 36 de stockage de la puissance nominale $P_{n\_VEi}$ de charge de la batterie 3 du véhicule $VE_i$ ;
- un module de calcul 31, destiné à mettre en oeuvre les étapes E11 et E121, apte à multiplier la puissance nominale de charge du véhicule $P_{n\_VEi}$ par le coefficient de réglage pondéré $k1'_i(t)$ (ou $k2'_i(t)$) ainsi que par le facteur de modulation $\beta(t)$ ;
- un module 32 de commande de la puissance de charge de la batterie 3.

Le dispositif de réglage de la puissance de charge 2 peut également comprendre un module de communication (non représenté destiné notamment à recevoir régulièrement des données mises à jour relatives à l'évolution du tarif de l'électricité en fonction du temps.

Les modules 21, 23, 24, 25, 26, 28, 29, 30, 31, 32 et 34 comportent des instructions logicielles pour commander l'exécution des étapes de procédé correspondantes, lorsque ces instructions sont exécutées par un processeur.

Le dispositif de réglage de la puissance comporte également une unité centrale de commande, en l'espèce un processeur, auquel tous les éléments décrits ci-dessus sont connectés et destiné à contrôler le fonctionnement de ces éléments.

L'invention concerne aussi un véhicule automobile électrique $VE_i$ comportant une batterie électrique 3 et un dispositif 2 de réglage d'une puissance de charge de la batterie tel que précédemment décrit.

**Revendications**

1. Procédé de réglage d'une puissance de charge d'une batterie de véhicule automobile électrique connecté à un réseau électrique en un point de raccordement donné comprenant :

    • une étape de test (E4) lors de laquelle on détermine si une tension mesurée au point de raccordement ($V_{mes\_i}$) appartient à une plage de tensions souhaitées ($[V_{min,}\ V_{max}]$) ;
    • en cas de test négatif, ladite tension mesurée ($V_{mes\_i}$) n'appartenant pas à la plage de tensions souhaitées ($[V_{min},\ V_{max}]$), on détermine (E5, E6) un coefficient ($k1_i(t)$, $k2_i(t)$) de réglage de la puissance de charge du véhicule, à partir d'un état de charge du véhicule ($SOC_i(t)$) et d'une durée de charge restante ($\Delta T_i(t)$) ;
    • on règle (E13) la puissance de charge du véhicule électrique ($P_{VEi}$) en fonction du coefficient de réglage déterminé.

2. Procédé selon la revendication 1, **caractérisé en ce que** le coefficient de réglage ($k1_i(t)$, $k2_i(t)$) déterminé est adapté pour déplacer la tension au point de raccordement vers la plage de tensions souhaitées, notamment pour l'augmenter si la tension mesurée est au-dessous de la plage et pour la diminuer si la tension mesurée est au-dessus de la plage.

3. Procédé selon l'une des revendications précédentes, **caractérisé en ce qu'**on détermine (E5, E6) un coefficient de réglage ($k1_i(t)$, $k2_i(t)$) par un premier mode de calcul ou par un deuxième mode de calcul, selon que la tension mesurée au point de raccordement est située au-dessus ou au-dessous de la plage de tensions souhaitées.

4. Procédé selon l'une des revendications précédentes, **caractérisé en ce que** le coefficient de réglage ($k1_i(t)$, $k2_i(t)$) est déterminé par logique floue.

5. Procédé selon la revendication précédente, **caractérisé en ce qu'**il est prévu une étape préalable de configuration (E0) lors de laquelle on définit (E02) des règles d'inférence pour déterminer un coefficient de réglage à partir d'un état de charge du véhicule et d'une durée de charge, et on détermine (E03), à partir des dites règles d'inférence, des données relatives à deux surfaces numériques (S1, S2) correspondant respectivement au premier et au deuxième mode de calcul du coefficient réglage.

6. Procédé selon la revendication précédente, **caractérisé en ce que** les deux surfaces (S1, S2) sont relatives à deux plages de valeurs distinctes du coefficient de réglage ($k1_i(t)$, $k2_i(t)$).

7. Procédé selon l'une des revendications précédentes, **caractérisé en ce que** le coefficient de réglage ($k1_i(t)$, $k2_i(t)$) est pondéré (E8, E9) par un paramètre ($\alpha_1$, $\alpha_2$) représentatif d'un écart de tension entre la tension mesurée au point de raccordement ($V_{mes\_i}$) et une tension limite souhaitée ($V_{min}$, $V_{max}$).

8. Procédé selon l'une des revendications précédentes, **caractérisé en ce qu'**on module (E121) la puissance de charge du véhicule en fonction de données ($C_{px}$) relatives à une évolution temporelle d'un tarif de l'électricité.

9. Procédé selon l'une des revendications précédentes, **caractérisé en ce que**, pour régler la puissance de charge, on multiplie (E11) une puissance nominale de charge du véhicule ($P_{n\_VEi}$) par le coefficient de réglage ($k1'_i(t)$, $k2'_i(t)$).

10. Procédé selon l'une des revendications précédentes, **caractérisé en ce que** la plage de tensions souhaitées a une borne supérieure qui est strictement inférieure à 1,1pu et une borne inférieure qui est strictement supérieure à 0,9pu, notamment une borne supérieure inférieure ou égale à 1.05pu et une borne inférieure supérieure ou égale à 0.95pu.

11. Dispositif de réglage d'une puissance de charge d'une batterie de véhicule automobile électrique connecté à un réseau électrique en un point de raccordement donné comprenant :

• un module de test (23) adapté pour déterminer si une tension mesurée au point de raccordement appartient à une plage de tensions souhaitées ([V$_{min}$, V$_{max}$]) ;

• un module (25) de détermination d'un coefficient de réglage (k1$_i$(t), k2$_i$(t)) de la puissance de charge du véhicule, adapté pour déterminer ledit coefficient de réglage à partir d'un état de charge du véhicule (SOC$_i$(t)) et d'une durée de charge restante (ΔT$_i$(t)), en cas de test négatif, ladite tension mesurée n'appartenant pas à la plage de tensions souhaitées ;

• un module de commande (32) adapté pour régler la puissance de charge du véhicule électrique en fonction du coefficient de réglage déterminé.

12. Dispositif selon la revendication 11, **caractérisé en ce qu'**il comprend un module de configuration (26) adapté pour définir (E02) des règles d'inférence pour déterminer un coefficient de réglage à partir d'un état de charge du véhicule et d'une durée de charge, et pour déterminer, à partir des dites règles d'inférence, des données relatives à deux surfaces numériques (S1, S2) correspondant respectivement au premier et au deuxième mode de calcul du coefficient réglage(k1$_i$(t), k2$_i$(t)).

13. Dispositif selon l'une des revendications 11 et 12, **caractérisé en ce qu'**il comprend un module de pondération (29) adapté pour pondérer le coefficient de réglage(k1$_i$(t), k2$_i$(t)) par un paramètre (α$_1$, α$_2$) représentatif d'un écart de tension entre la tension mesurée au point de raccordement (V$_{mes\_i}$) et une tension limite souhaitée.

14. Dispositif l'une des revendications 11 à 13, **caractérisé en ce qu'**il comprend un module de modulation (31) destiné à moduler la puissance de charge du véhicule en fonction de données (C$_{px}$) relatives à une évolution temporelle d'un tarif de l'électricité.

15. Véhicule automobile électrique comportant une batterie électrique (3) et un dispositif selon l'une des revendications 11 à 14 destiné à régler une puissance de charge de la batterie (3).

SOC$_i$(t)

E01

FUZZY

E02

INF.

E03

FUZZY$^{-1}$

ΔT$_i$(t)

S1
S2

**Figure 1**

C$_{px}$

E120

C$_{px}$ ➜ C$_β$

E13

VE$_i$

E5

SOC$_i$(t)

ΔT$_i$(t)

Fuzzy

k1$_i$(t)

E8

X

k1'$_i$(t)

E10

1/s

P'$_{VEi}$

E11, E121

X

V$_{min}$

V$_{mes\_i}$

P$_{n\_VEi}$

**Figure 2A**

C$_{px}$

E120

C$_{px}$ ➜ C$_β$

E13

VE$_i$

E6

SOC$_i$(t)

ΔT$_i$(t)

Fuzzy

k2$_i$(t)

E9

X

k2'$_i$(t)

E10

1/s

P'$_{VEi}$

E11, E121

X

V$_{max}$

V$_{mes\_i}$

P$_{n\_VEi}$

**Figure 2B**

**Figure 3**

**Figure 4**

**Figure 5**

**Figure 6**

|  |  | SOC$_i$(t) | | | | |
|---|---|---|---|---|---|---|
|  |  | **socP** | **socMP** | **socM** | **socMG** | **socG** |
| **ΔT$_i$(t)** | **tP** | P | P | MP | M | MG |
| | **tPM** | P | MP | MP | MG | G |
| | **tM** | P | MP | M | MG | G |
| | **tMG** | MP | M | M | MG | G |
| | **tG** | MP | M | MG | G | G |

**Figure 7**

**Figure 8A**

**Figure 8B**

**FIGURE 9**

**FIGURE 10**

**FIGURE 11**

**FIGURE 12**

Europäisches
Patentamt

European
Patent Office

Office européen
des brevets

# RAPPORT DE RECHERCHE EUROPEENNE

Numéro de la demande

EP 15 19 8320

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 518 852 A2 (HITACHI LTD [JP]) 31 octobre 2012 (2012-10-31) | 1-4, 7-11, 13-15 | INV. B60L11/18 H02J7/04 |
| A | * le document en entier * | 5,6,12 | |
| A | EP 2 602 909 A1 (HITACHI LTD [JP]) 12 juin 2013 (2013-06-12) * le document en entier * | 1,11 | |
| A | EP 2 456 036 A1 (PANASONIC CORP [JP]) 23 mai 2012 (2012-05-23) * le document en entier * | 1,11 | |
| A | EP 2 581 257 A2 (NISSAN MOTOR MFG UK LTD [GB]) 17 avril 2013 (2013-04-17) * le document en entier * | 1,11 | |

### DOMAINES TECHNIQUES RECHERCHES (IPC)

B60L
H02J

Le présent rapport a été établi pour toutes les revendications

| Lieu de la recherche | Date d'achèvement de la recherche | Examinateur |
|---|---|---|
| Munich | 23 mars 2016 | Tille, Daniel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    .........................................................................
& : membre de la même famille, document correspondant

EPO FORM 1503 03.82 (P04C02)

# EP 3 031 660 A1

## ANNEXE AU RAPPORT DE RECHERCHE EUROPEENNE
## RELATIF A LA DEMANDE DE BREVET EUROPEEN NO.

EP 15 19 8320

23-03-2016

| Document brevet cité au rapport de recherche | | Date de publication | Membre(s) de la famille de brevet(s) | | Date de publication |
|---|---|---|---|---|---|
| EP 2518852 | A2 | 31-10-2012 | CN | 102761153 A | 31-10-2012 |
| | | | EP | 2518852 A2 | 31-10-2012 |
| | | | JP | 5416735 B2 | 12-02-2014 |
| | | | JP | 2012235545 A | 29-11-2012 |
| | | | US | 2012274268 A1 | 01-11-2012 |
| EP 2602909 | A1 | 12-06-2013 | CN | 103053091 A | 17-04-2013 |
| | | | EP | 2602909 A1 | 12-06-2013 |
| | | | JP | 5417280 B2 | 12-02-2014 |
| | | | JP | 2012039685 A | 23-02-2012 |
| | | | US | 2013119947 A1 | 16-05-2013 |
| | | | WO | 2012017985 A1 | 09-02-2012 |
| EP 2456036 | A1 | 23-05-2012 | CN | 102474110 A | 23-05-2012 |
| | | | EP | 2456036 A1 | 23-05-2012 |
| | | | JP | 5563574 B2 | 30-07-2014 |
| | | | JP | 2014200171 A | 23-10-2014 |
| | | | US | 2012112696 A1 | 10-05-2012 |
| | | | WO | 2011007573 A1 | 20-01-2011 |
| EP 2581257 | A2 | 17-04-2013 | EP | 2581257 A2 | 17-04-2013 |
| | | | GB | 2495500 A | 17-04-2013 |

EPO FORM P0460